# EUROPEAN PATENT SPECIFICATION

(11) **EP 2 031 427 B1**
(45) Date of publication and mention of the grant of the patent: **29.11.2017**
(21) Application number: 07075726.5
(22) Date of filing: 28.08.2007
(51) Int. Cl.: G02B 6/42

(54) **Optical terminal**
Optisches Endgerät
Terminal optique

(43) Date of publication of application: 04.03.2009
(73) Proprietor: Toyota Motor Europe, 1140 Brussels (BE)
(72) Inventor: Ascari, Luca, 56025 Pontedera (IT); Laschi, Cecilia, 58022 Follonica (IT); Corradi, Paolo, 42100 Reggio Emilia (IT); Ambeck-Madsen, Jonas, 1000 Brussel (BE); Dario, Paolo, 57128 Livorno (IT); Yanagihara, Hiromichi, 1150 Woluwe St. Pierre (BE)
(74) Representative: Intès, Didier Gérard André

(56) References cited:
- JP-A- 2001 094 125
- JP-A- 2005 234 557
- JP-A- 2006 184 680
- US-A- 4 297 653
- US-A1- 2003 190 124
- US-A1- 2006 210 225

## Description

### Technical field of the invention

This invention relates to methods and systems for optical coupling. More particularly, the present invention relates to optical terminals, to systems having such terminals, to methods of manufacturing such terminals and to methods of coupling radiation from and/or to optical fibers. The optical coupling according to the present invention may find advantageous use in robotics.

### Background of the invention

Optical transceivers for use in an optical local area network (LAN) system or the like, generally are arranged to have an optical transmitter in the form of an optical chip module such as a semiconductor laser, connected to an external optical fiber, in which the optical axis of the optical chip module, or the like, or a photodiode or the like, is made to extend along the direction of the circuit board, and an optical connector is fitted on the end portion of the circuit board or lead frame upon which these optical devices have been mounted.

As vertical emitting optical devices become more common, such as Surface-Emitting LED (SE-LEDs), or a so-called surface emission type laser diode (VCSEL: Vertical Cavity Surface-Emitting Laser), it is necessary to redirect the optical axis direction of the optical fiber to suit the optical device. It has been contemplated to assemble an optical connector which is capable of changing the optical axis to the tip end of the optical fiber, and to arrange this optical connector over the optical transceiver of the circuit board; but, in this case, it is necessary to direct the optical axis direction of the optical fiber towards the optical device with high accuracy. Furthermore, it is advantageous to avoid interference between the optical connector and the wiring pattern and so on, and furthermore increase of compactness is being demanded.

It is known from US 2006/0210225 to provide an optical transceiver for use with vertical emitting optical devices mounted on a circuit board. The connector main body is detachable from a circuit board and comprises: a hollow optical fiber holding portion for holding chiefly the coating portion of an optical fiber which is led out in parallel with the circuit board surface, an optical fiber aperture which passes and fixes the vicinity of the tip end of the optical fiber, and a concave reflective surface for changing the optical axis. This reflective surface is formed facing an exit hole of this optical fiber aperture and causes the direction of the optical axis of the optical fiber to face said optical device. The reflective surface for changing the optical axis is slanted at an angle of 45° with respect to the optical axis direction of the optical fiber.

A multi-core optical fiber ribbon core can be used, in which one or a plurality of optical fibers which are positioned at one side thereof in the widthwise direction are used for signal transmission, and one or a plurality of optical fibers which are positioned at the other side thereof are used for signal reception. To reduce optical cross-talk, one or a plurality of fibers at a central portion of the ribbon are not used. In this case, the distance between the optical signal generation portion and the optical signal reception portion becomes greater, to reduce the occurrence of problems of signal mixing and the like due to light scattering.

JP2006184680 (A) discloses an optical connector attachable to a substrate on which an optical element is directly or indirectly mounted.

US2006210225 (A1) refers to an optical transceiver including an optical device which is provided upon a substrate.

US2003190124 (A1) discloses a multichannel optical communications module.

### Summary of the invention

It is an object of the invention to provide good apparatus or methods for optical coupling of light from and/or to optical fibers. It is an advantage of embodiments according to the present invention that cross-talk between neighbouring optical channels in opto-electronic Systems is reduced or minimised. It is an advantage of embodiments of the present invention to provide efficient and accurate coupling of a plurality of neighbouring optical channels.

The invention relates to an optical coupler according to claim 1 and a method of manufacturing an optical terminal according to claim 16. According to a first aspect, the disclosure provides an optical coupler, such as e.g. an optical connector, for providing an optical path between a plurality of optical fibers and a plurality of optical and/or opto-electronic devices, the terminal comprising a plurality of apertures arranged for receiving the plurality of optical fibers, and a plurality of reflecting means or reflectors, each reflecting means or reflector being aligned with an aperture such that an optical path between a fiber, when provided in said aperture, and an optical device is substantially deflected, wherein the optical coupler is adapted for providing optical paths to meet the optical devices, at least one of these optical and/or opto-electronic devices being offset from a neighbouring optical device with respect to a direction perpendicular to the aperture.

According to some embodiments of the present disclosure, such an offset enables at least some of the optical and/or opto-electronic devices to be spaced further apart and helps reduce an amount of optical cross-talk, for a given width of device. It may also help ease the alignment precision requirements during manufacturing, as there will be more space between the optical devices, and less likelihood of damaging the devices. It is an advantage of embodiments according to the present disclosure that a robust optical coupler is obtained. Neighbouring reflecting means / optical and/or opto- electronic devices / optical parts may be reflecting means / optical and/or opto-electronic devices / optical paths positioned closest to the reflecting means / optical and/or opto-electronic device / optical path under discussion. The offset can be created in various ways, by an offset in the positions of the reflectors, or in the angles of the reflectors, or by offsetting the relative positions of the fibers at different heights with respect to the substrate, one above another for example or alternatingly at a first height and at a second height.

The optical coupler being adapted for providing optical paths to meet the optical and/or opto-electronic devices may be such that at least one of the reflecting means or reflectors is adapted for providing optical paths to meet the optical and/or opto-electronic devices, at least one of these optical and/or opto-electronic devices being offset from a neighbouring optical and/or opto-electronic device in a direction perpendicular to the aperture, e.g. the aperture of the at least one of these optical and/or opto-electronic. The optical coupler being adapted for providing optical paths to meet the optical and/or opto- electronic devices may be such that at least one of the reflecting means or reflectors is offset from a neighbouring reflecting means or reflector, said offset being in a direction perpendicular to the aperture.

The optical coupler may be adapted for being mounted on a substrate. This is particularly suitable for ease of manufacture and to suit vertical emitting or receiving optical and/or opto-electronic devices. An alternative would be to mount the devices on the structure, which might ease the alignment requirements and make locating the structure easier, but could make it more costly to manufacture since connections would be needed from the optical device to other devices or to external devices. The optical coupler being adapted for providing optical paths to meet the optical devices may comprise that at least one of the reflecting means is adapted for substantially deflecting the optical path under a different angle than a neighbouring reflecting means or reflector.

The optical coupler being adapted for providing optical paths to meet the optical and/or opto-electronic devices may comprise that at least one of the apertures is positioned substantially offset in a direction perpendicular to a plane comprising the optical receiving or emitting surfaces of the optical and/or opto-electronic devices.

The plurality of apertures in the optical coupler may be arranged in parallel for receiving a plurality of parallel optical fibres. It is an advantage of embodiments according to the present disclosure that a large number of parallel optical fibres can be efficiently and accurately coupled to optical and/or opto-electronic devices.

The reflectors may be arranged to deflect the optical path substantially perpendicular to a plane of the fibres. It is an advantage of embodiments according to the present disclosure that a compact optical coupler can be provided.

Embodiments of the apparatus or corresponding methods of using or manufacturing the apparatus can have any additional features, some of which are set out in the claims, and described in more detail below. One such additional feature is the terminal being a transceiver and at least one of the optical devices comprising an optical transmitter, and the neighbouring optical devices comprising at least one optical receiver. This tends to suffer more from cross coupling than if there are only transmitters or only receivers, and hence the adaptation, e.g. offsetting, can have more effect.

Another such feature is the optical structure, also referred to as structure, having a partition to act as a light barrier between optical transmitters and optical receivers. This can further help reduce optical cross-talk. The latter may be obtained by reduction or avoidance of cross-talk due to stray light.

Another such feature is the terminal having a substrate, arranged parallel to the plane of the fibers, and more than one of the apertures and corresponding reflectors being formed in a single structure suitable for mounting on the substrate.

Another such feature is at least some of the optical and/or opto- electronic devices being mounted on a same side of the substrate as the structure. It is an advantage of embodiments of the present disclosure that a compact coupling can be obtained, even when using surface emitting light sources. An alternative is to provide an aperture or window in the substrate to enable the optical path reach optical and/or opto-electronic devices on the other side.

Another such feature is the structure having at least one recess to accommodate the optical and/or opto-electronic devices mounted on the same side of the substrate. This can enable the structure to protect the optical and/or opto-electronic devices from physical damage for example. Said recesses can be filled with optical-quality transparent resin such as epoxy or acrylic resin resin, or other suitable optical polymer to be cured by cold curing, heating or UV exposure, in order to match the refractive index of the optical fiber and, especially, to achieve a better packaging of the LEDs, preventing dirt from entering into the recesses transparent epoxy, and, in addition, increasing robustness of the system and rigidity of the substrate in case this is flexible, for instance.

Another such feature is each of the offset reflectors being arranged to be interleaved with the other reflectors.

Another such feature is the apertures and their respective reflectors being arranged to be adjacent so that the optical path from the end of the fiber does not need a lens before the reflector.

Another such feature is an end stop for locating the fiber in the aperture, and to prevent the fiber from being inserted into the recess. This helps prevent damage to the respective optical device or bond wires or other components on the substrate for example.

Another such feature is the structure being formed from a machined piece of reflective material, e.g. a piece of metal. This can provide good rigidity, and can in some cases provide a surface sufficiently reflective to use as the reflector without further surface coating, or with only inexpensive coating.

Another such feature is the structure having a length in a direction of a longitudinal axis of the fibers of less than 5mm. The structure may have a length in a direction perpendicular to the apertures of less than 5mm.

In another aspect, the present disclosure also relates to an optical terminal for terminating a number of optical fibers, wherein the optical terminal comprises a plurality of optical and/or opto-electronic devices and an optical coupler for coupling the optical fibres to the optical and/or opto-electronic devices as described above. The optical terminal may comprise a substrate, whereby the optical coupler is mounted on the substrate and adapted for receiving the optical fibres parallel to the substrate. At least some of the optical and/or opto-electronic devices may be mounted on the substrate. At least some of the optical and/or opto-electronic devices may be mounted on a same side of the substrate of the optical coupler. The optical terminal may be a transceiver, wherein at least one of said plurality of optical devices comprises an optical transmitter and at least one of its neighbouring optical and/or opto- electronic devices comprises at least one optical receiver. Other aspects of the disclosure include a system having the optical terminal set out above, and having electrical circuitry coupled to the optical and/or opto-electronic device. The present disclosure therefore also relates to an opto-electronic system comprising an optical terminal as described above, wherein the opto-electronic system comprises electrical circuitry coupled to the plurality of optical and/or opto-electronic devices.

Another aspect provides a method of manufacturing an optical terminal for terminating optical fibers, the method having the steps of attaching optical and/or opto-electronic devices to a substrate, coupling the optical and/or opto-electronic devices to electrical circuitry, and aligning and fixing an optical coupler over the optical and/or opto-electronic devices, the optical coupler having a plurality of apertures arranged for receiving the plurality of the optical fibers, and a plurality of reflectors, each reflector being aligned with an aperture such that an optical path between a fiber, when provided in the aperture, and an optical and/or opto-electronic device is substantially deflected, and wherein the optical coupler is adapted for providing optical paths to meet the optical and/or opto-electronic devices, at least one of these optical devices being offset from a neighbouring optical and/or opto-electronic device in a direction perpendicular to the aperture.

The structure can have the offsetting, or any of the additional features set out above.

Any of the additional features can be combined together and combined with any of the aspects. Other advantages will be apparent to those skilled in the art, especially over other prior art. Numerous variations and modifications can be made without departing from the claims of the present invention. Therefore, it should be clearly understood that the form of the present invention is illustrative only and is not intended to limit the scope of the present invention.

The reference figures quoted below refer to the attached drawings.

### Brief description of the drawings

Fig. 1 shows an overall view of an example of a system having the optical terminal according to an embodiment of the present invention.
Fig. 2 shows a three quarter transparent view of an optical terminal according to an embodiment of the present invention.
Fig. 3 shows a transparent plan view of the optical terminal of Fig. 2.
Fig. 4 shows a transparent side view of the optical terminal of Fig. 2.
Fig. 5 shows a photographic view of an optical terminal according to an embodiment of the present invention.
Figs 6, 7, 8 and 9 show further views of the structure part 40 of the embodiment of Fig. 2.
Figs 10, 11 and 12 show respectively a side view, end view and plan view of an embodiment corresponding to that of Fig.2.
Fig. 13 shows a cross section view A-A of the same embodiment as shown in Fig. 2.
Fig. 14 shows a plan view of the same embodiment as shown in Fig. 2 showing hidden lines.
Fig. 15 shows a three quarter view of a structure having curved reflectors, according to an exemplary embodiment of the present invention,
Fig. 16a shows a side view of an optical coupler receiving fibres at different heights with respect to the substrate, in an illustrative example not according to the present invention.
Fig. 16b shows a side view of an optical coupler receiving fibres at different heights and angles with respect to the substrate, in an illustrative example not according to the present invention.
Fig. 17 shows a top view of an optical coupler receiving fibres at different angles with respect to each other and parallel to the substrate, in an illustrative example not according to the present invention.
Fig. 18a and Fig. 18b show a side view, respectively top view of a coupler in an illustrative example not according to the present invention.
Fig. 19a, Fig. 19b and Fig. 19c show two perpendicular cross-sections BB' and CC' and a top view of an optical coupler in an illustrative example not according to the present invention.
Fig. 20 shows some steps in manufacturing an optical terminal according to an embodiment, and
Fig. 21 shows a photographic view of a manufacturing set up for carrying out the steps of fig. 20 according to an embodiment.

In the different figures, the same reference signs refer to the same or analogous elements.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps. Where an indefinite or definite article is used when referring to a singular noun e.g. "a" or "an", "the", this includes a plural of that noun unless something else is specifically stated.
The term "comprising", used in the claims, should not be interpreted as being restricted to the means listed thereafter; it does not exclude other elements or steps. Thus, the scope of the expression "a device comprising means A and B" should not be limited to devices consisting only of components A and B. It means that with respect to the present invention, the only relevant components of the device are A and B.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

The embodiments described below have the advantage of appreciating issues to be solved relating to coupling the light emitted by a plurality of vertical or surface emitting optical sources such as LEDs into optical fibers. These may include minimizing the channel cross-talk, preferably without lens integration, to maintain simplicity. These also may include keeping device planarity. Another advantage of embodiments of the present invention is that these confer robustness to the optical and electrical parts of the optical terminal. Another advantage of some embodiments of the present invention is that these improve alignments by integrating a simple mechanical end-stop for optical fiber alignment.

According to a first aspect of the invention, an optical coupler and corresponding optical terminal is provided that provides optical paths between a plurality of optical fibres and a plurality of optical and/or opto-electronic devices. The optical coupler comprises a plurality of apertures and a plurality of reflecting means or reflectors aligned with each other. The reflectors deflect the optical path substantially. The reflector or reflecting means can be formed by a surface coating on the structure, or by attaching a reflective material or layer to the body of the structure for example, or by a surface of the structure material when this is reflective. The structure can be formed by multiple parts rather than a single part, which might ease the machining of the part, though a single part is likely to be simpler to assemble. The optical coupler further is adapted such that the optical paths meet the optical devices whereby at least one of these optical devices is offset from its neighbouring optical devices. The offset may be at least partly in the direction perpendicular to the aperture for the at least one of these optical devices, corresponding with the direction of the optical axis of the fibre when provided in the aperture, or more particularly the plane defined by the aperture. The offset can be created in various ways : by an offset in the positions of the reflectors, or by a variation in the angles of the reflectors, i.e. the angles of the reflecting surface with respect to the substrate or the surface where the optical coupler couples out, or by offsetting the relative positions of the fibers at different heights with respect to the substrate, for example one above another or alternatingly at a first height and at a second height with respect to the substrate or the surface where the optical coupler couples out.

Any type of optical fibres may be used, such as e.g. but not limited to plastic optical fibres. The number of fibres may be large. Embodiments of the present invention may be especially suitable for a set of parallel fibres to be coupled in a parallel way to a set of optical and/or opto-electronic devices, although the invention is not limited thereto. The optical devices may be radiation emitters, radiation detectors or a combination thereof. The optical and/or opto-electronic devices can be attached to the structure rather than the substrate if appropriate, before the structure is attached to the substrate. The optical and/or opto-electronic devices are not limited to transmitters and receivers, they can include monitoring or sensing devices, optical components such as optical filters, wavelength selective reflectors, polarizing components, displays, and so on, and combinations of such components. The apertures may have a cross section suitable for each receiving, e.g. firmly receiving, an optical fiber. The optical terminal comprises a plurality of optical devices and the optical coupler as described above which is aligned to couple optical fibers to the optical and/or opto-electronic devices. The optical coupler and corresponding optical terminal will be illustrated by way of a plurality of examples, the present invention not being limited thereto.

In following examples, the optical coupler is adapted to couple radiation from light sources, i.e. surface emitting light sources. In the present examples Surface-Emitting LED (SE-LEDs) were chosen as light emitters since they are easy to find commercially at low cost and in a wide range of sizes and spectral characteristics, though other emitters can be used. However, due to the typical upward (lambertian) emission of SE-LEDs and according to the requirement of maintaining the opto-electronic system as much flat and thin as possible (skin-like applications, surface installation on PCB with height constraints, etc.), a system able to bend the light emitted mainly vertically to the substrate, by 90° or so, needs to be integrated. Furthermore, a robust packaging is also necessary in order to protect optical devices such as LED dies, their wire bonds, and, at the same time, host and align optical fiber terminations in correspondence to the light sources. For these purposes, an optical coupler, in the present example being a metallic miniaturized case, was fabricated by means of micromachining processes, which can host up to nine optical fibres in the example shown. It can suppress, or drastically limit, the cross-talk between optical channels.

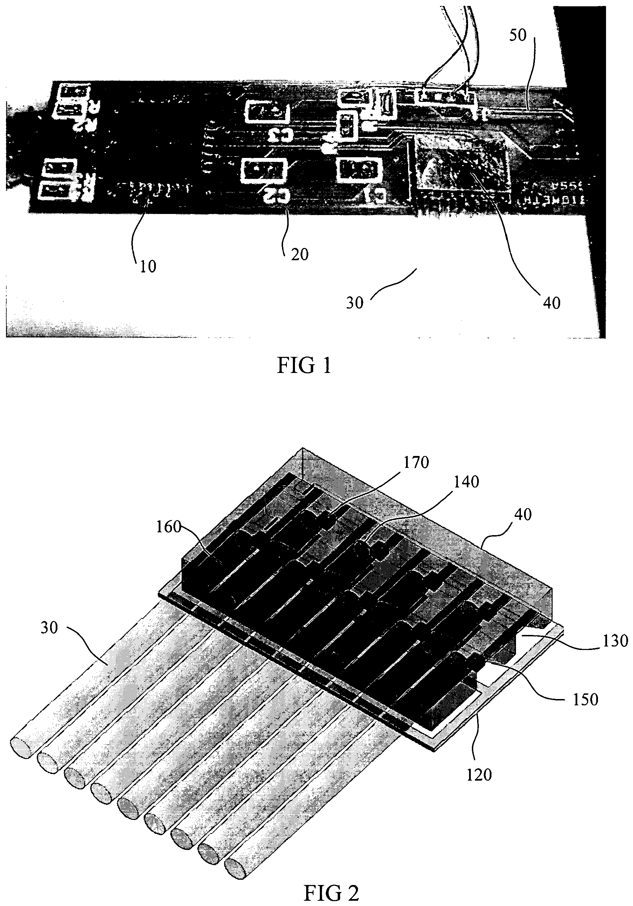

Figures 1-5 illustrate examples of an optical coupler, optical terminal and corresponding opto-electronic device or part thereof. Fig. 1 shows an example of a system having a (flexible) printed circuit board pcb 20, various discrete electronic components, an integrated circuit 10, and an optical terminal 40. Metallic conductive tracks 50 on the pcb couple the various components. Optical fibers 30 are terminated in the optical terminal, more particularly in the optical coupler. In the present example the optical fibers are running parallel with each other and parallel to the plane of the pcb, although also other orientations between the fibers or between the fibers and the substrate may be used. The optical coupler and corresponding optical terminal can be incorporated into any kind of system used for any type of signal processing, analog or digital, for any kind of application, including LAN processing, sensor signal processing, or any sort of data processing.

Fig. 2 shows a three quarter transparent view of an optical coupler and corresponding optical terminal according to an embodiment. Fibers 30 are shown in parallel inserted into apertures 160, of the optical coupler 40, also referred to as structure 40. End stops 140 are optionally provided at the end of each aperture to locate the ends of the fibers accurately. The latter provide the possibility of robustness and ease of installing or use of the corresponding electro-optical device. The structure in the present example is mounted on a substrate 120. The substrate can be a flexible printed circuit board (pcb), or a rigid pcb, or other substrate. The optical devices 170 are shown on the substrate, covered by the structure, and offset from neighbouring optical devices in an interleaved manner. Recesses 130 are provided in the structure to accommodate the optical devices. Reflectors or reflecting means 150 are provided in the structure, facing the ends of the fibers to deflect light from the ends of the fibers down onto the optical respective devices. No lens is provided in this example, though lenses could be provided, or the reflector could be concave. e.g. parabolic, to provide some focusing. The reflectors or reflecting means 150 may be planar surfaces oriented under an angle with respect to the optical fibre so as to deflect the optical path coming from the optical fibre. Although the slant angle of the reflective surface for changing the optical axis is suitably a slant angle of 45° with respect to the direction of the optical axis of the optical fiber 30, it is not necessarily limited to being 45°. According to requirements, it would be possible to utilize any angle which is capable of causing reflection of the light which has been emitted from the optical fiber 30 so that it can enter the optical device 170, or which can cause reflection along a path which is reverse thereto. The reflectors or reflecting means 150 also may be a curved surface, optionally having a focussing function on the detector or optical fibre end surface.

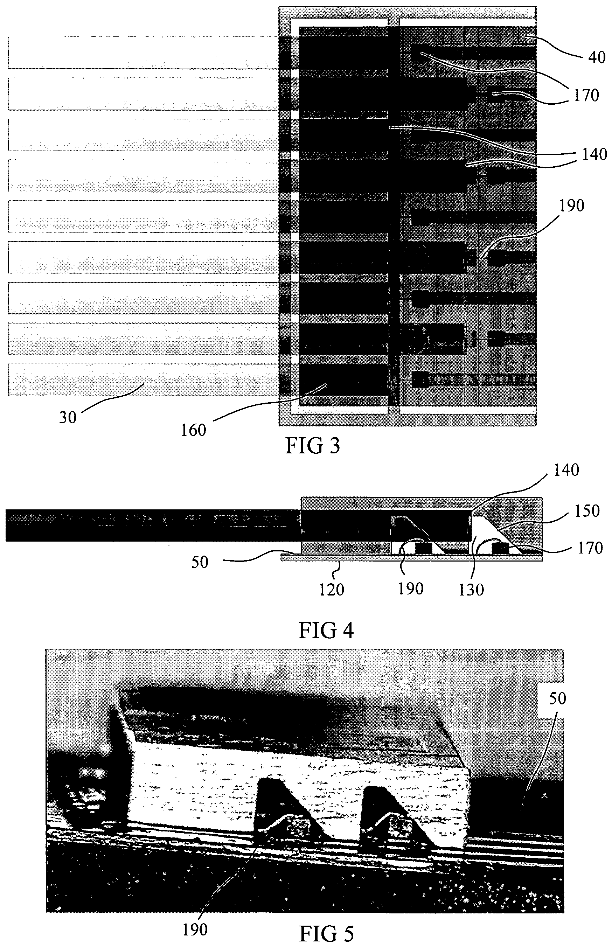

Fig. 3 shows a transparent plan view of the optical coupler and optical terminal of fig. 2. This figure shows more clearly the offsetting of alternate ones of the ends of the fibers, caused by the locations of the end stops 140, to align the optical paths to the offset locations of the optical devices 170. Such end stops 140 may e.g. be structural features avoiding that the optical fiber can be inserted deeper through the aperture, thus protecting other components of the optical coupler, optical terminal or opto-electronic device from being harmed by the optical fiber.

The recesses can be in the form of channels, one for all the optical devices offset to the right in fig. 3, and one for all those optical devices offset to the left in fig. 3. Between these channels, the walls of the channels may act as a partition to block light. These may extend to the substrate or have some clearance from the substrate at least where there are conductive tracks on the substrate, to avoid damage to such tracks. Partially, the same function may be performed by optical fibers separating the optical devices that are offset to the left in fig. 3 (in particular if this part of the fibers is coated in a way to block light). Optionally there could be partitions additionally between neighbouring optical devices having the same direction of offset, even if this requires different and more complex fabrication processes. Bond wires 190 are also visible, underneath the transparent optical coupler.

Fig. 4 shows a transparent side view of the optical terminal of fig. 2. This figure shows more clearly the recesses 130, and the locations of the end stops 140, and the reflecting means or reflectors 150 relative to the optical devices 170, and the substrate 120. Circuit tracks 50 are also shown on the substrate.

Fig. 5 shows a photographic view of an optical terminal according to an embodiment. This is a similar view to the side view of fig. 4. It shows the bond wires 190 coupling the optical devices to the tracks 50.

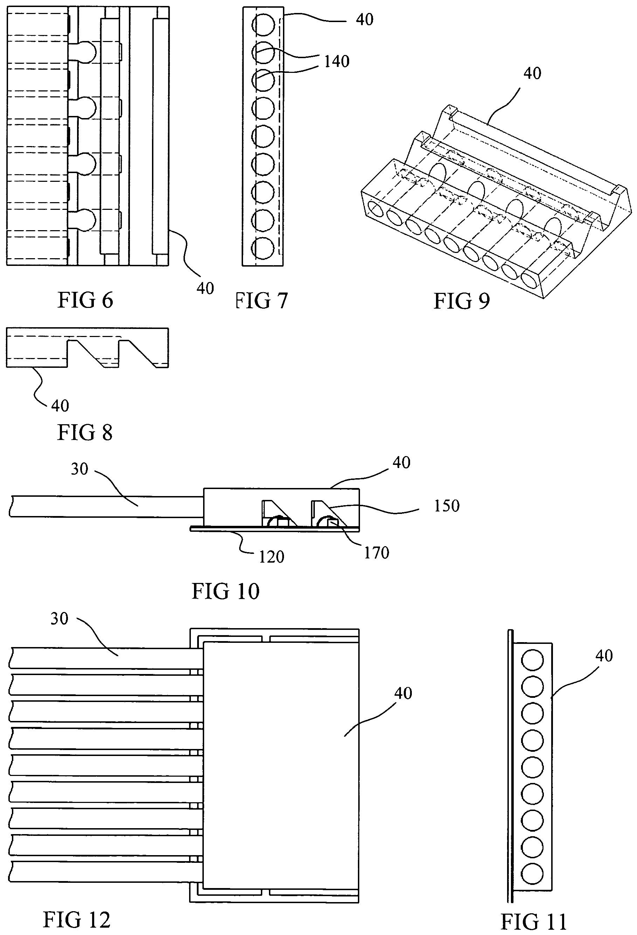

Figs 6, 7, 8 and 9 show further views of the optical coupler, i.e. structure part, 40 of the embodiment of fig. 2 alone before fibers have been inserted, or before attachment to a substrate.

Figs 10, 11 and 12 show respectively a side view, end view and plan view of an embodiment corresponding to that of fig.2, after fibers have been inserted, and after attachment to a substrate having the optical devices. Corresponding reference numerals have been used as appropriate.

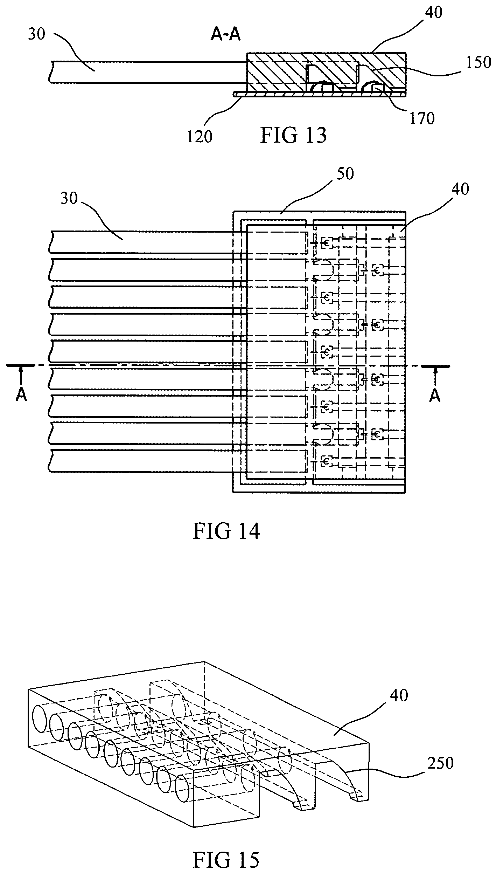

Fig. 13 shows a cross section view A-A of the same embodiment, showing the reflectors, recesses, optical devices and bonding wires, and showing the clearance between the bottom of the channel walls and the substrate, to allow the conductive tracks on the surface of the substrate to pass without being physically damaged or short circuited by the structure. Again, corresponding reference numerals have been used as appropriate.

Fig. 14 shows a plan view of the same embodiment showing hidden lines, and showing the array of conductive tracks 50 to the optical devices.

Fig. 15 shows a three quarter view of a structure having curved reflectors 250, to provide some focusing of the optical beam passing to or from the optical device.

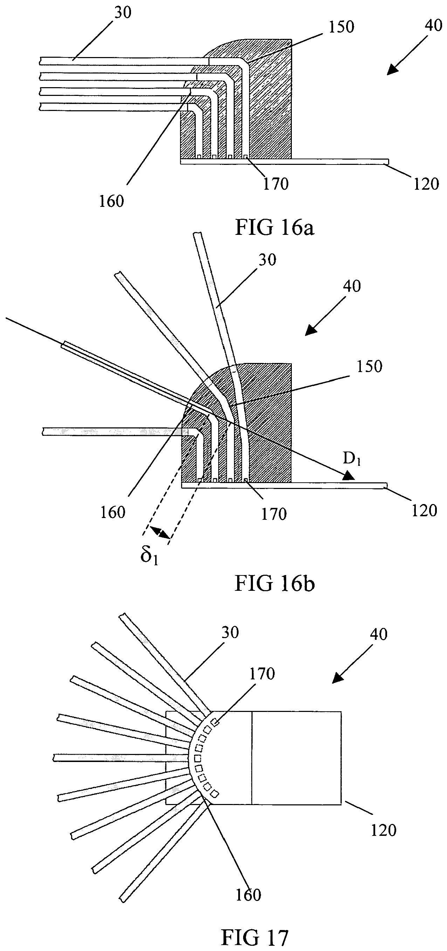

As mentioned above, alternative ways of achieving the offsetting could include altering the angles of the reflectors, raising or lowering the fibers relative to the substrate, raising or lowering the position of the apertures, i.e. the position where the fibre is coupled in the optical coupler, etc. Any combination of these ways could be envisaged, which still maintain the advantages of reduced cross-talk and/or more relaxed positioning precision of the structure since there is more space between the optical devices. A plurality of examples of optical couplers not according to the present invention as claimed using some of the above mentioned ways of achieving the offsetting is shown in Fig. 16 to Fig. 19c. Fig. 16a shows a side view of a particular example of an optical coupler wherein the paths to meet the optical and/or opto-electronic devices are adapted to meet optical and/or opto-electronic devices at different offset positions on the substrate by receiving the fibres at different heights. Fig. 16b shows a side view of a particular example of an optical coupler wherein the paths to meet the optical and/or opto-electronic devices are adapted to meet optical and/or opto-electronic devices at different offset positions on the substrate by receiving the fibres at different angles (and heights). By way of example, an optical coupler 40 is shown wherein the optical coupler is adapted for receiving the fibres 30 at different angles, and whereby reflection at different angles of the reflecting surfaces with respect to the substrate plane occurs for guiding radiation between the optical fibres and the optical and/or opto-electronic devices 170. By way of illustration, the offset between the second and third fibre in the direction D1 perpendicular to the aperture 160 of the second fibre is shown by the distance δ1. The substrate 120 and the reflecting means 150 also are indicated. The apertures 160 thereby are positioned at different heights. Whereas the latter is not beneficial for the flatness of the system, it results in reduced cross-talk.

Fig. 17 shows a top view of a substrate whereby the fibres 30 are received under different angles. As the apertures can be provided substantially at the same distance from the substrate plane, the latter allows to obtain a substantially flat optical coupler. An offset is again obtained in a direction perpendicular to one of the apertures. Nevertheless, the cross-talk reduction in this particular example may be limited as the direction of the fibres 30 is more favourable for e.g. accepting light from neighbouring LEDs compared to e.g. the setup of Fig. 6 to Fig. 9.

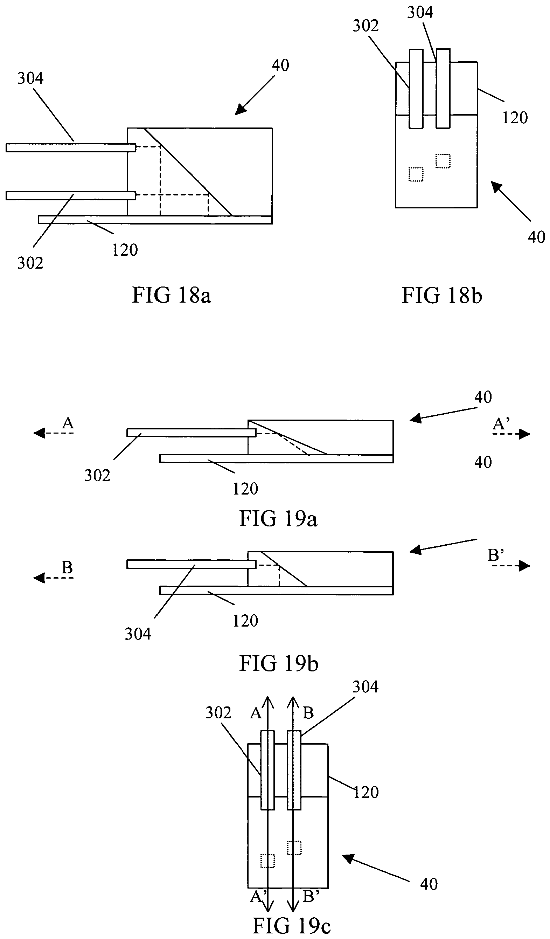

Fig. 18a and Fig. 18b show a side view respectively a top view of an optical coupler 40 according to a particular example of the first aspect, whereby the offset is obtained by providing neighbouring apertures at different heights with respect to the substrate 120. The latter results in neighbouring fibres 302, 304 providing radiation on light paths that meet the optical and/or opto-electronic devices at positions offset in a direction perpendicular to the aperture plane. The latter provides a reduction in cross talk. To a smaller extent, a relative flat optical coupler is obtained. The height of neighbouring apertures may be alternatively set to a first value and a second value, such that a large number of optical fibres may be coupled in parallel without suffering too much from cross-talk. In a particular example the apertures may be provided at different heights with respect to the substrate, but such that a plurality of parallel fibres can be received.

Fig. 19a, Fig. 19b and Fig. 19c illustrate respectively a first cross-section BB', a second cross-section CC' and a top view of an optical coupler 40 wherein the offset is obtained by a variation in reflection angle of the reflector 150. In the present example, two neighbouring reflectors 312, 314 are illustrated each having a different reflection angle such that for optical fibres 302, 304 the optical paths meet the optical and/or opto-electronic devices at offset positions with respect to the direction perpendicular to the plane of the aperture of one of the optical fibres. An advantage of such an example is that a plurality of fibres 30 can be coupled in parallel, the fibres being positioned parallel and in a plane parallel to the substrate 120. The latter allows obtaining a relatively flat optical coupler 40.

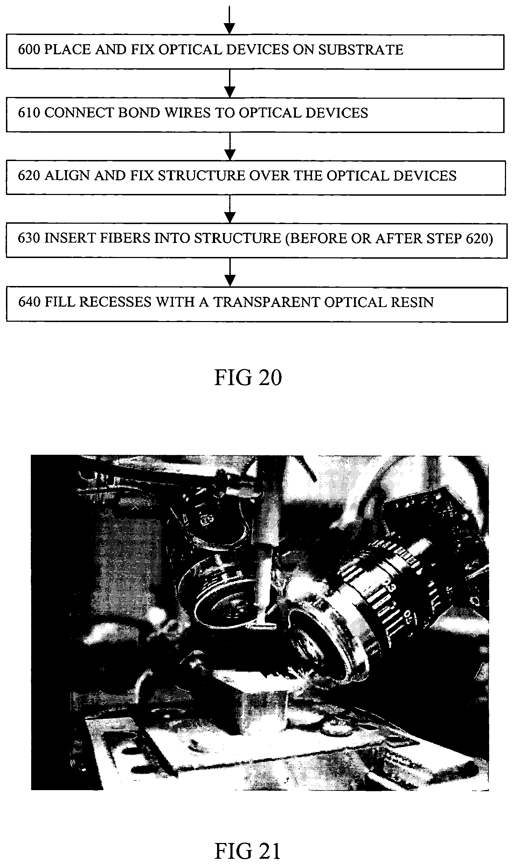

These particular examples illustrate different ways on how offset can be obtained. In another aspect, the present invention relates to a method for manufacturing an opto-electronic device with an optical coupler as described in the first aspect. The method comprises providing optical devices on a substrate and aligning and fixing an optical coupler over the optical devices on the substrate. The optical coupler thereby is adapted for providing optical paths to meet the optical devices, at least one of these optical devices being offset from a neighbouring optical device in a direction perpendicular to the aperture. Figs 20, 21 illustrate examples of a manufacturing method and corresponding apparatus. Fig. 20 shows some steps in manufacturing an optical terminal according to an embodiment. At step 600, the optical devices are placed and fixed to the substrate. This can be before or after other electronic circuit components are fixed on the substrate. At step 610 bond wires or other connections are made to connect the optical devices to the tracks and thus to other electronic components. The structure is then aligned and fixed over the optical devices, aligned so that the optical paths coincide with the optical devices. Before or after this, the optical fibers can be inserted into the apertures in the structure and fixed in place. Optionally the fibers can be detachably connected, if suitable ferrules and so on are provided, using known components which need not be describe in more detail here. Optionally, as a last process step 640, recesses 130 can be filled with optical transparent material, such as e.g. optical-quality transparent resin such as epoxy or acrylic resin, or other suitable optical polymers to be cured by cold curing, heating or UV exposure, by closing, for example, one side of the optical coupler and pouring the liquid polymer into the other open side of the recesses, while keeping the whole structure suitably skewed. In this way, a better packaging of the optical devices may be achieved, preventing dirt from entering into the recesses, anchoring optical fiber tips, and, in addition, increasing robustness of the system and stiffness of the substrate in case this is flexible. The optical transparent material conveniently may have a suitable refractive index in order to optimize light coupling into the optical fibers.

Fig. 21 shows a photographic view of a manufacturing set up for carrying out the steps of fig. 20 according to an embodiment. It shows a laboratory-made assembly station used to mount the micro-optical devices onto a flexible substrate. A metallic case is held by a suction pipette in the assembly station ready to be assembled. A pair of cameras are shown to provide assistance for manual control of the relative location of the parts. The entire process of fabrication and assembly of the optical system was conceived and optimized in order to be feasible with automatic machines for mass production (in order to have a distributed sensing system in thin and wide substrates). The optical system prototypes required careful assembly in order to finely place micro-drops of conductive glue on top of the LED pads, to pick & place micrometric LED dies and glue them on the respective pads, and, finally, to mount precisely the metallic case avoiding to break bond wires and/or LED dies and finely aligning it in order to optimize light coupling into the optical fibers. The same assembly station was used also for all these purposes, in order to give the capability to precisely control, by means of visual inspection of the two camera images, the position of the sensor to be assembled in the x-, y- and z-axis plus rotation around the z-axis and tilt angle control around the x- and y-axis. The z-axis itself is motorized with a computer controlled motor stage with sub-pm resolution. The components were held by a suction pipette, which can be joined to a load cell monitored by computer, to be eventually used to evaluate the pressure applied on the metallic case during placement. The flexible substrate was fixed on a plate that could be heated (for in situ glue curing) and whose temperature is also monitored by the computer. Wire bonding was performed with a manual wire-bonding machine.

In one aspect, the present invention also relates to an opto-electronics device comprising an optical terminal and corresponding optical coupler. The opto-electronics device may further comprise wiring for the optical devices in the optical terminal and further elements depending on the functionality of the opto-electronics device. One example of such an opto-electronics device is a multi-sensor device as can be used in robotics for multi-sensing purposes such as in sensitive skin, this only being one example of an opto-electronics device and the invention not being limited thereto. The final assembled optical system in one example includes nine surface emitting LEDs, in the present example being commercial LED dies (ELC-660-23 from Epigap). They emit radiation with a wavelength of about 650 nm (visible red) and they have a size of 275 × 275 × 180 µm³. An optical coupler is used, in the present example being a metallic case, with a size of 6.5mm longx 4mm wide × 1 mm height, which has the role of 1) reflecting the light emitted by LEDs into Plastic Optical Fibers (POFs), by mean of a 45°-inclined (or parabolic) mirror reflective side inside the metallic coupler, 2) preventing or drastically reducing the cross-talk between the optical channels, due to an interleaved placement of the terminations of the POFs, 3) packaging the POFs and limiting their insertion preventing fibers from touching the fragile bonding wires, 4) protecting LEDs and bond wires, allowing rough handling of the module and conferring robustness and stiffness to this delicate part of the system.

By way of example, the present invention not being limited thereto, fabrication of several metallic optical couplers by means of two main successive micromachining processes is described. In the present example, A fabrication process according to an embodiment allows to produce a plurality of, e.g. ten, metallic optical couplers in a single machine run. The initial rough metallic block was prepared with conventional milling machines. The metallic optical couplers were generated all in parallel with a side, the one opposite to the drilled side, connected to the rest of the metallic block. The holes for fiber insertion were created as first step by a 5-axis ultra-precision Computer Numerical Control (CNC) machine, using a drilling tip with 550 µm diameter, that is 50 µm more than the nominal diameter of the optical fibers used, in order to compensate for optical fiber tolerances. Afterwards, the metallic parts underwent micromachining in a micro-wire Electro-Discharging-Machine, where the two recesses and, thus, the two 45°-slanted reflective sides were formed. These were formed by removing two triangular prisms from the main body of the optical coupler, and by performing, in particular, nine passes on the inclined sides (i.e. the reflectors) with a brass-coated piano EDM wire, in order to achieve a greater smoothness. The depth of the cut of the EDM-wire was limited in order to leave a thin part of the fiber apertures still uncovered, so forming mechanical end-stops to fibers during insertion. The metallic end-stop shields a small surface of the fiber section from light, but the loss is negligible for the large diameter of the POFs used in this example. The thickness of the end-stops was calculated taking into account the nominal tolerances of the POF diameter. Depending on the material, very low roughness of the reflective surface can be achieved with EDM machining. In the developed prototype, an Aluminum alloy (Ergal) was used in place of more performing materials, such as steel or brass, for instance, mainly because the manufacturing process was faster and cheaper. The superficial roughness contributes to the residual cross-talk that was measured. A surface rugosity Ra = 0.27 ± 0.03 µm over a 1 mm horizontal span was found in the present example.

Nine Poly-Methyl-Meta-Acrylate (PMMA) plastic optical fibres were used with a diameter of 500 µm and a length of about 1.5 - 2 m. Conventional POFs are much worse than glass fibres regarding optical transmission efficiency. The POFs used have a loss of 0.15 - 0.2 dB/m at 650 nm and the transmission bandwidth is limited by their large numerical aperture (NA) and step-index profile. However, it is adequate for running short links, such as inside instruments or within a room for desktop connections up to 50 m. The small distances to be covered in the present application make the power loss along the fibre a negligible problem. Nevertheless, coupling the light into the fibre is a major issue.

The manual assembly procedures were time consuming, but they overall allowed suitable precision and control. The effects of imperfect alignment between the LEDs and the fibers resulted in an average standard deviation in emission intensity among all the channels, measured at the end of a same probing fibre, of about 10.8%. The optical system demonstrated a good cross-talk suppression, which was limited to 1.1% between adjacent channels. Cross-talk measurements are reported in percentage on the value of the current, generated by a probing photodiode, obtained by collecting the light of the emitting LED in its own channel, which corresponds to maximum intensity. Performing the same measurement with an optical coupler having no optical devices or reflectors offset, and consequently all the LEDs aligned using the same pitch as in the first optical coupler a cross-talk of 12.6% between adjacent channels was measured. The latter illustrates that the first optical coupler having offset devices and reflectors assures ten times less cross-talk at the cost of increasing the length of the coupler of only about 1.2 mm. It thereby is to be noticed that because the second coupler having no optical devices or reflectors offset, hosts fibers with a diameter that is two times smaller than that of the fibers inserted in the first optical coupler, the cross-talk reduction by offsetting the devices and reflectors may be even larger as a smaller fiber diameter also decreases the cross-talk..

The metallic optical coupler is suitable for every photoemitters, and photodetector as well, with a surface working principle. With both photodetectors and photoemitters the optical module becomes a transceiver (namely a transmitter and receiver), offering the possibility to separate input and output channels (all the photoemitters in-line under a reflective stage, and all the photodiodes in-line under the other stage) and thus avoiding any local cross-talk.

The optical fibers can be in the form of a coated optical fiber ribbon. The optical fibers can be single-core optical fibers and can have an outer diameter of 0.25 mm. The apertures can be arranged to suit the dimensions of the fibers. The apertures could be in the form of position determination grooves for accurately positioning the optical fibers. Such grooves could be V-grooves or semi-circular or U-shape in cross section or the like.

It is to be understood that although preferred embodiments, specific constructions and configurations, as well as materials, have been discussed herein for devices according to the present invention, various changes or modifications in form and detail may be made without departing from the scope of this invention. Other embodiments can be envisaged within the claims. Functionality may be added or deleted from the block diagrams and operations may be interchanged among functional blocks.

## Claims

1. An optical coupler (40) for providing an optical path between a plurality of optical fibers (30) and a plurality of optical and/or opto-electronic devices (170), the optical coupler (40) comprising
- a plurality of apertures (160) arranged for receiving the plurality of optical fibers (30), the plurality of apertures being arranged in parallel and in a common plane, and in a longitudinal direction corresponding to the optical axis of the fibres when provided in the apertures, and
- a plurality of reflectors (150), each reflector (150) being aligned with an aperture (160) such that an optical path between a fibre (30), when accommodated by said aperture (160), and an optical and/or opto-electronic device (170) is substantially deflected, the plurality of reflectors comprising a first set of reflectors and a second set of reflectors, corresponding to alternate ones of the apertures, and wherein the reflectors of the first set are arranged in a common plane, and
wherein the optical coupler (40) is adapted for providing optical paths to meet the optical and/or opto-electronic devices,
**characterized by**
at least one of these optical and/or opto-electronic devices being offset from a neighbouring optical and/or opto-electronic device (170) with respect to said longitudinal direction , wherein
the reflectors of the second set are offset relative to the first set in said longitudinal direction, so that the apertures corresponding to the second set of reflectors extend through the plane of the first set.

2. An optical coupler (40) according to any of the previous claims, wherein the optical coupler (40) is adapted for being mounted on a substrate.

3. An optical coupler (40) according to claims 1 or 2, wherein the reflectors are arranged to deflect the optical path substantially perpendicular to a plane of the fibres.

4. An optical coupler (40) according to any of the previous claims, the optical coupler furthermore comprising a partition to act as a light barrier between at least two neighbouring optical and/or opto-electronic devices.

5. An optical coupler (40) according to any of the previous claims, wherein the optical coupler comprises at least one recess (130) to accommodate the optical and/or opto-electronic devices mounted on the same side of the substrate.

6. An optical coupler (40) according to any of the previous claims wherein the apertures and their respective reflectors are arranged to be adjacent so that the optical path from the end of the fiber does not need a lens before the reflector.

7. An optical coupler (40) according to any of the previous claims, the apertures having an end stop (140) for locating the fiber in the aperture.

8. An optical coupler (40) according to any of the previous claims, the optical coupler being formed from a machined piece of reflective material.

9. An optical coupler (40) according to any of the previous claims, the coupler having a length in a direction perpendicular to the apertures of less than 5mm.

10. An optical terminal for terminating a number of optical fibers (30), the optical terminal comprising a plurality of optical and/or opto-electronic devices and an optical coupler according to any of claims 1 to 9.

11. An optical terminal according to claim 10, the optical terminal comprising a substrate (120), whereby the optical coupler is mounted on said substrate and adapted for receiving said optical fibres parallel to said substrate.

12. An optical terminal according to claim 11, wherein at least some of the optical and/or opto-electronic devices are mounted on the substrate.

13. An optical terminal according to claims 11 or 12, wherein at least some of the optical and/or opto-electronic devices are mounted on a same side of the substrate as the optical coupler.

14. An optical terminal according to any of claims 10 to 13, the optical terminal being a transceiver, wherein at least one of said plurality of optical and/or opto-electronic devices comprises an optical transmitter and at least one of its neighbouring optical and/or opto-electronic devices comprises at least one optical receiver.

15. An opto-electronic system comprising an optical terminal according to any of claims 10 to 14, wherein the opto-electronic system comprises electrical circuitry (10, 50) coupled to the plurality of optical and/or opto-electronic devices.

16. A method of manufacturing an optical terminal for terminating optical fibers, the method having the steps of attaching optical and/or opto-electronic devices to a substrate and aligning and fixing an optical coupler over the optical and/or opto-electronic devices, the optical coupler having a plurality of apertures (160) arranged for receiving the plurality of the optical fibers (30), the plurality of apertures being arranged in parallel and in a common plane, and in a longitudinal direction corresponding to the optical axis of the fibres when provided in the apertures, and a plurality of reflectors (150), each reflector (150) being aligned with an aperture (160) such that an optical path between a fibre (30), when provided in the aperture (160), and an optical and/or opto-electronic device (170) is substantially deflected, the plurality of reflectors comprising a first set of reflectors and a second set of reflectors, corresponding to alternate ones of the apertures, and wherein the reflectors of the first set are arranged in a common plane, and
wherein the optical coupler (40) is adapted for providing optical paths to meet the optical and/or opto-electronic devices,
**characterized by**
at least one of these optical and/or opto-electronic devices being offset from a neighbouring optical and/or opto-electronic device in said longitudinal direction perpendicular to the aperture of said at least one of these optical and/or opto-electronic devices, wherein
the reflectors of the second set are offset relative to the first set in said longitudinal direction, so that the apertures corresponding to the second set of reflectors extend through the plane of the first set.

## Patentansprüche

1. Optischer Koppler (40) zum Bereitstellen eines optischen Pfads zwischen mehreren optischen Fasern (30) und mehreren optischen und/oder optoelektronischen Vorrichtungen (170), wobei der optische Koppler (40) umfasst:
- mehrere Öffnungen (160), die zum Aufnehmen der mehreren optischen Fasern (30) angeordnet sind, wobei die mehreren Öffnungen parallel und in einer gemeinsamen Ebene angeordnet sind, und in einer Längsrichtung, die der optischen Achse der Fasern entspricht, wenn sie in den Öffnungen vorgesehen sind, und
- mehrere Reflektoren (150), wobei jeder Reflektor (150) derart mit einer Öffnung (160) ausgerichtet ist, dass ein optischer Pfad zwischen einer Faser (30), wenn sie durch die Öffnung (160) aufgenommen wird, und einer optischen und/oder optoelektronischen Vorrichtung (170) im Wesentlichen umgelenkt wird, wobei die mehreren Reflektoren einen ersten Satz von Reflektoren und einen zweiten Satz von Reflektoren umfassen, die abwechselnden der Öffnungen entsprechen, und wobei die Reflektoren des ersten Satzes in einer gemeinsamen Ebene angeordnet sind und
wobei der optische Koppler (40) zum Bereitstellen optischer Pfade, um mit den optischen und/oder optoelektronischen Vorrichtungen zusammengeführt zu werden, ausgebildet ist,
**dadurch gekennzeichnet, dass**
mindestens eine dieser optischen und/oder optoelektronischen Vorrichtungen von einer benachbarten optischen und/oder optoelektronischen Vorrichtung (170) in Bezug auf die Längsrichtung versetzt ist, wobei
die Reflektoren des zweiten Satzes relativ zu dem ersten Satz in der Längsrichtung versetzt sind, so dass sich die Öffnungen, die dem zweiten Satz von Reflektoren entsprechen, durch die Ebene des ersten Satzes erstrecken.

2. Optischer Koppler (40) nach einem beliebigen der vorhergehenden Ansprüche, wobei der optische Koppler (40) dazu ausgebildet ist, auf einem Substrat angebracht zu werden.

3. Optischer Koppler (40) nach Anspruch 1 oder 2, wobei die Reflektoren angeordnet sind, um den optischen Pfad im Wesentlichen im rechten Winkel zu einer Ebene der Fasern umzulenken.

4. Optischer Koppler (40) nach einem beliebigen der vorhergehenden Ansprüche, wobei der optische Koppler ferner eine Trennwand umfasst, um als Lichtbarriere zwischen mindestens zwei benachbarten optischen und/oder optoelektronischen Vorrichtungen zu dienen.

5. Optischer Koppler (40) nach einem beliebigen der vorhergehenden Ansprüche, wobei der optische Koppler mindestens eine Ausnehmung (130) umfasst, um die optischen und/oder optoelektronischen Vorrichtungen aufzunehmen, die auf derselben Seite des Substrats angebracht sind.

6. Optischer Koppler (40) nach einem beliebigen der vorhergehenden Ansprüche, wobei die Öffnungen und deren entsprechende Reflektoren derart angeordnet sind, dass sie angrenzend sind, so dass der optische Pfad von dem Ende der Faser keine Linse vor dem Reflektor benötigt.

7. Optischer Koppler (40) nach einem beliebigen der vorhergehenden Ansprüche, wobei die Öffnungen einen Endanschlag (140) zum Positionieren der Faser in der Öffnung aufweisen.

8. Optischer Koppler (40) nach einem beliebigen der vorhergehenden Ansprüche, wobei der optische Koppler aus einem bearbeiteten Stück aus reflektierendem Material gebildet wird.

9. Optischer Koppler (40) nach einem beliebigen der vorhergehenden Ansprüche, wobei der Koppler in einer im rechten Winkel zu den Öffnungen verlaufenden Richtung eine Länge kleiner als 5 mm aufweist.

10. Optisches Terminal zum Abschließen einer Anzahl von optischen Fasern (30), wobei das optische Terminal mehrere optische und/oder optoelektronische Vorrichtungen und einen optischen Koppler nach einem beliebigen der Ansprüche 1 bis 9 umfasst.

11. Optisches Terminal nach Anspruch 10, wobei das optische Terminal ein Substrat (120) umfasst, wobei der optische Koppler auf dem Substrat angebracht und zum Aufnehmen der optischen Fasern parallel zu dem Substrat ausgebildet ist.

12. Optisches Terminal nach Anspruch 11, wobei mindestens einige der optischen und/oder optoelektronischen Vorrichtungen auf dem Substrat angebracht sind.

13. Optisches Terminal nach Anspruch 11 oder 12, wobei mindestens einige der optischen und/oder optoelektronischen Vorrichtungen auf einer selben Seite des Substrats wie der optische Koppler angebracht sind.

14. Optisches Terminal nach einem beliebigen der Ansprüche 10 bis 13, wobei das optische Terminal ein Transceiver ist, wobei mindestens eine der mehreren optischen und/oder optoelektronischen Vorrichtungen einen optischen Sender umfasst und mindestens eine ihrer benachbarten optischen und/oder optoelektronischen Vorrichtungen mindestens einen optischen Empfänger umfasst.

15. Optoelektronisches System, umfassend ein optisches Terminal nach einem beliebigen der Ansprüche 10 bis 14,
wobei das optoelektronische System elektrische Schaltungen (10, 50) umfasst, die mit den mehreren optischen und/oder optoelektronischen Vorrichtungen gekoppelt sind.

16. Verfahren zum Herstellen eines optischen Terminals zum Abschließen von optischen Fasern, wobei das Verfahren die Schritte des Befestigens optischer und/oder optoelektronischer Vorrichtungen an einem Substrat und des Ausrichtens und Befestigens eines optischen Kopplers über den optischen und/oder optoelektronischen Vorrichtungen umfasst, wobei der optische Koppler mehrere Öffnungen (160), die zum Aufnehmen der mehreren optischen Fasern (30) angeordnet sind, wobei die mehreren Öffnungen parallel und in einer gemeinsamen Ebene angeordnet sind und in einer Längsrichtung, die der optischen Achse der Fasern entspricht, wenn sie in den Öffnungen vorgesehen sind, und mehrere Reflektoren (150) aufweist, wobei jeder Reflektor (150) derart mit einer Öffnung (160) ausgerichtet ist, dass ein optischer Pfad zwischen einer Faser (30), wenn sie in der Öffnung (160) vorgesehen ist, und einer optischen und/oder optoelektronischen Vorrichtung (170) im Wesentlichen umgelenkt wird, wobei die mehreren Reflektoren einen ersten Satz von Reflektoren und einen zweiten Satz von Reflektoren umfassen, die abwechselnden der Öffnungen entsprechen, und wobei die Reflektoren des ersten Satzes in einer gemeinsamen Ebene angeordnet sind, und
wobei der optische Koppler (40) zum Bereitstellen optischer Pfade ausgebildet ist, um mit den optischen und/oder optoelektronischen Vorrichtungen zusammengeführt zu werden,
**dadurch gekennzeichnet, dass**
mindestens eine dieser optischen und/oder optoelektronischen Vorrichtungen von einer benachbarten optischen
und/oder optoelektronischen Vorrichtung (170) in der Längsrichtung im rechten Winkel zu der Öffnung der mindestens einen dieser optischen und/oder optoelektronischen Vorrichtungen versetzt ist, wobei
die Reflektoren des zweiten Satzes relativ zu dem ersten Satz in der Längsrichtung versetzt sind, so dass sich die Öffnungen, die dem zweiten Satz von Reflektoren entsprechen, durch die Ebene des ersten Satzes erstrecken.

## Revendications

1. Coupleur optique (40) destiné à procurer un passage optique entre une pluralité de fibres optiques (30) et une pluralité de dispositifs optiques et/ou optoélectroniques (170), le coupleur optique (40) comportant
- une pluralité d'ouvertures (160) prévue pour recevoir la pluralité de fibres optiques (30), la pluralité d'ouvertures étant prévue en parallèle et dans un plan commun, et dans une direction longitudinale correspondant à l'axe optique des fibres lorsqu'elles sont prévues dans les ouvertures, et
- une pluralité de réflecteurs (150), chaque réflecteur (150) étant aligné avec une ouverture (160) de telle sorte qu'un passage optique entre une fibre (30), lorsqu'elle est reçue par ladite ouverture (160), et un dispositif optique et/ou optoélectronique (170) est sensiblement décalé, la pluralité de réflecteurs comportant un premier ensemble de réflecteurs et un deuxième ensemble de réflecteurs, correspondant à des ouvertures alternées des ouvertures, et dans lequel les réflecteurs du premier ensemble sont prévus dans un plan commun, et
dans lequel le coupleur optique (40) est prévu pour procurer des passages optiques pour correspondre aux dispositifs optiques et/ou optoélectroniques,
**caractérisé par**
au moins un de ces dispositifs optiques et/ou optoélectroniques qui est décalé par rapport à un dispositif optique et/ou optoélectronique avoisinant (170) par rapport à ladite direction longitudinale, dans lequel les réflecteurs du deuxième ensemble sont décalés par rapport au premier ensemble dans ladite direction longitudinale, de telle sorte que les ouvertures correspondant au deuxième ensemble de réflecteurs s'étendent à travers le plan du premier ensemble.

2. Coupleur optique (40) selon l'une quelconque des revendications précédentes, dans lequel le coupleur optique (40) est prévu pour être monté sur un substrat.

3. Coupleur optique (40) selon les revendications 1 ou 2, dans lequel les réflecteurs sont prévus pour dévier le passage optique de manière sensiblement perpendiculaire à un plan des fibres.

4. Coupleur optique (40) selon l'une quelconque des revendications précédentes, le coupleur optique comportant en outre une séparation pour agir en tant que barrière de lumière entre au moins deux dispositifs optiques et/ou optoélectroniques voisins.

5. Coupleur optique (40) selon l'une quelconque des revendications précédentes, dans lequel le coupleur optique comporte au moins un renfoncement (130) pour recevoir les dispositifs optiques et/ou optoélectroniques montés sur le même côté du substrat.

6. Coupleur optique (40) selon l'une quelconque des revendications précédentes dans lequel les ouvertures et leurs réflecteurs respectifs sont prévus pour être adjacents de telle sorte que le passage optique depuis l'extrémité de la fibre n'a pas besoin d'une lentille avant le réflecteur.

7. Coupleur optique (40) selon l'une quelconque des revendications précédentes, les ouvertures ayant une butée d'extrémité (140) pour positionner la fibre dans l'ouverture.

8. Coupleur optique (40) selon l'une quelconque des revendications précédentes, le coupleur optique étant formé à partir d'une pièce usinée de matière réfléchissante.

9. Coupleur optique (40) selon l'une quelconque des revendications précédentes, le coupleur ayant une longueur dans une direction perpendiculaire aux ouvertures de moins de 5mm.

10. Terminaison optique destinée à terminer un nombre de fibres optiques (30), la terminaison optique comportant une pluralité de dispositifs optiques et/ou optoélectroniques et un coupleur optique selon l'une quelconque des revendications 1 à 9.

11. Terminaison optique selon la revendication 10, la terminaison optique comportant un substrat (120), de sorte que le coupleur optique est monté sur ledit substrat et prévu pour recevoir lesdites fibres optiques parallèles audit substrat.

12. Terminaison optique selon la revendication 11, dans laquelle au moins certains des dispositifs optiques et/ou optoélectroniques sont montés sur le substrat.

13. Terminaison optique selon les revendications 11 ou 12, dans laquelle au moins certains des dispositifs optiques et/ou optoélectroniques sont montés d'un même côté du substrat que le coupleur optique.

14. Terminaison optique selon l'une quelconque des revendications 10 à 13, la terminaison optique étant un émetteur-récepteur, dans laquelle au moins un de ladite pluralité de dispositifs optiques et/ou optoélectroniques comporte un émetteur optique et au moins un de ses dispositifs optiques et/ou optoélectroniques avoisinants comporte au moins un récepteur optique.

15. Système optoélectronique comportant une terminaison optique selon l'une quelconque des revendications 10 à 14, dans lequel le système optoélectronique comporte un circuit électrique (10, 50) relié à la pluralité de dispositifs optiques et/ou optoélectroniques.

16. Procédé de fabrication d'une terminaison optique pour terminer des fibres optiques, le procédé ayant les étapes de fixation des dispositifs optiques et/ou optoélectroniques sur un substrat et d'alignement et de fixation d'un coupleur optique sur les dispositifs optiques et/ou optoélectroniques, le coupleur optique ayant une pluralité d'ouvertures (160) prévues pour recevoir la pluralité de fibres optiques (30), la pluralité d'ouvertures étant prévue en parallèle et dans un plan commun, et dans une direction longitudinale correspondant à l'axe optique des fibres quand elles sont prévues dans les ouvertures, et une pluralité de réflecteurs (150), chaque réflecteur (150) étant aligné avec une ouverture (160) de telle sorte qu'un passage optique entre une fibre (30), quand elle est prévue dans l'ouverture (160), et un dispositif optique et/ou optoélectronique (170) est sensiblement dévié, la pluralité de réflecteurs comportant un premier ensemble de réflecteurs et un deuxième ensemble de réflecteurs, correspondant à des ouvertures alternées des ouvertures, et dans lequel les réflecteurs du premier ensemble sont prévus dans un plan commun, et
dans lequel le coupleur optique (40) est prévu pour procurer des passages optiques pour correspondre aux dispositifs optiques et/ou optoélectroniques,
**caractérisé par**
au moins un de ces dispositifs optiques et/ou optoélectroniques qui est décalé par rapport à un dispositif optique et/ou optoélectronique avoisinant dans ladite direction longitudinale perpendiculaire à l'ouverture dudit au moins un de ces dispositifs optiques et/ou optoélectroniques, dans lequel
les réflecteurs du deuxième ensemble sont décalés par rapport au premier ensemble dans ladite direction longitudinale, de telle sorte que les ouvertures correspondant au deuxième ensemble de réflecteurs s'étendent à travers le plan du premier ensemble.
